# EUROPEAN PATENT SPECIFICATION

(11) **EP 4 814 869 B1**
(45) Date of publication and mention of the grant of the patent: **09.12.2026**
(21) Application number: 25165698.9
(22) Date of filing: 24.03.2025
(51) Int. Cl.: G06T 7/254, G06T 7/277

(54) **METHODS, A NON-TRANSITORY COMPUTER READABLE MEMORY AND A DEVICE FOR UPDATING A TRACK OF AN OBJECT**
VERFAHREN, NICHTTRANSITORISCHER COMPUTERLESBARER SPEICHER UND VORRICHTUNG ZUR AKTUALISIERUNG EINER SPUR EINES OBJEKTS
PROCÉDÉS, MÉMOIRE NON TRANSITOIRE LISIBLE PAR ORDINATEUR ET DISPOSITIF DE MISE À JOUR D'UNE PISTE D'UN OBJET

(43) Date of publication of application: 30.09.2026
(73) Proprietor: Axis AB, 223 69 Lund (SE)
(72) Inventor: Hök, Jakob, 22369 LUND (SE); Jönsson, Andreas, 22369 LUND (SE)
(74) Representative: AWA Sweden AB

(56) References cited:
- US-A1- 20240 153 106
- TANG S L ET AL: "Hybrid blob and particle filter tracking approach for robust object tracking", PROCEDIA COMPUTER SCIENCE, ELSEVIER, AMSTERDAM, NL, vol. 1, no. 1, 1 May 2010 (2010-05-01), pages 2549 - 2557, XP027492187, ISSN: 1877-0509, [retrieved on 20100501], DOI: 10.1016/J.PROCS.2010.04.288

## Description

### Technical field

The present invention relates to the field of object tracking. In particular, it relates to a method and a device for updating a track of an object in relation to a current image frame.

### Background

In order to track an object in a sequence of video images from a video camera it is common to use a tracking filter, such as a Kalman filter. The purpose of the filter is to filter a set of noisy detections of the object in image frames of the video to output a smooth object track. These filters include a motion model which models how a state of the object, such as location and velocity, evolves from one time point to another. When the filter is used, the motion model is used to predict a state of the object in a current image frame from the state of the object in a previous image frame. The predicted state in some or all of the sequences of video images may be updated in view of an object detection from a computer implemented object detector using an object detection algorithm. However, the object detection algorithm may not always provide correct location information and when objects are close they be mixed up. Thus, updating the predicted location with location information from the computer implemented object detector would then not constitute an enhancement. There is thus room for improvements.

US 2024/153106 A1 describes object tracking generating a highly accurate trail by correcting detection box position according to a reliability calculated from flow information.

### Summary of the invention

It is an objective of the present invention to mitigate the above problems and provide new methods, a non-transitory computer readable memory, and a device for updating a track of an object in relation to a current image.

According to a first aspect, a method is provided for updating a track of an object in relation to a current image frame. A first track of an object in a sequence of image frames preceding the current image frame is determined using a first computer implemented tracker. The first computer implemented tracker is updated in at least a first subset of image frames of the sequence of image frames based on an object detection from a computer implemented object detector using an object detection algorithm. The first track includes a respective estimated location of the object in each image frame of the first subset of image frames of the sequence of image frames. A location of the object in the current image frame is predicted using a motion model of the first computer implemented tracker. Furthermore, determined respective locations of detected motion areas in the current image frame are received from a computer implemented motion detector using a motion detection algorithm. Using the first computer implemented tracker, and based on the predicted location of the object in the current image frame and the determined respective locations of the detected motion areas, it is determined that a detected motion area of the detected motion areas is associated with the object in the current image frame. Only on condition that the detected motion area determined to be associated with the object does not overlap a different track than the first track, the predicted location of the object in the current image frame is updated using the first computer implemented tracker and based on the determined location of the detected motion area determined to be associated with the object in the current image frame. Thereby an estimated location of the object in the current image frame is determined.

The invention is based on a realization that there are scenarios when an object detection algorithm may not provide correct location information, that there are scenarios when objects may be mixed up due to being close, and when motion detection may identify objects not identified by object detection. In such scenarios a determined location of a detected motion area from a motion detection algorithm may be used to update the predicted location of the object in order to enhance the tracking of the object.

By receiving the determined respective locations of the detected motion areas in the current image frame from the computer implemented motion detector, and determined that a detected motion area of the detected motion areas is associated with the object in the current image frame, the predicted location of the object in the current image frame can be updated using the first computer implemented tracker and based on the determined location of the detected motion area. This enhances the accuracy of the estimated location of the object in the current image determined by the updating. According to a second aspect, a method is provided for updating a track of an object in relation to a current image frame. A first track of an object in a sequence of image frames preceding the current image frame is determined using a first computer implemented tracker. The first computer implemented tracker is updated in at least a first subset of image frames of the sequence of image frames based on an object detection from a computer implemented object detector using an object detection algorithm. The first track includes a respective estimated location of the object in each image frame of the first subset of image frames of the sequence of image frames. A location in the first track of the object in the current image frame is predicted using a motion model of the first computer implemented tracker. Furthermore, it is determined that a second track is associated with the first track. The second track being determined in the sequence of image frames preceding the current image frame using a second computer implemented tracker. The second computer implemented tracker is updated in at least a second subset of image frames of the sequence of image frames based on motion detection from a computer implemented motion detector using an motion detection algorithm. An estimated location in the second track of the object in the current image frame is received from the second computer implemented tracker. Only on condition that the estimated location in the second track of the object in the current image frame does not overlap a different track than the first track in the current image frame, the predicted location of the object in the current image frame is updated using the first computer implemented tracker and based on the received estimated location in the second track of the object in the current image frame. Thereby an estimated location in the first track of the object in the current image frame is determined.

By determining that a second track is associated with the first track and receiving the estimated location in the second track of the object in the current image frame from the second computer implemented tracker, the predicted location of the object in the current image frame can be updated using the first computer implemented tracker and based on the determined location of the detected motion area. This enhances the accuracy of the estimated location of the object in the current image determined by the updating.

According to a third aspect a non-transitory computer-readable medium is provided comprising computer program code which, when executed by a device with processing capability, causes the device to carry out one of the method of the first aspect or the method of the second aspect.

According to a fourth aspect a device for updating a track of an object in relation to a current image frame is provided comprising circuitry configured to execute one of the method of the first aspect or the method of the second aspect.

It is to be understood that this invention is not limited to the particular component parts of the device described or acts of the method described as such devices and methods may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above, as well as additional objects, features and advantages of the present invention, will be better understood through the following illustrative and nonlimiting detailed description of embodiments of the present invention, with reference to the appended drawings, where the same reference numerals will be used for similar elements, wherein:
Fig. 1 schematically illustrates an device for updating a track of an object in relation to a current image frame according to embodiments.
Fig. 2 is a flow chart of a method for updating a track of an object in relation to a current image frame according to embodiments.
Fig. 3 schematically illustrates another device for updating a track of an object in relation to a current image frame according to embodiments.
Fig. 4 is a flow chart of another method for updating a track of an object in relation to a current image frame according to embodiments.

### Detailed description of embodiments

The present invention will now be described more fully hereinafter with reference to the accompanying drawings, in which embodiments of the invention are shown. The systems and devices disclosed herein will be described during operation.

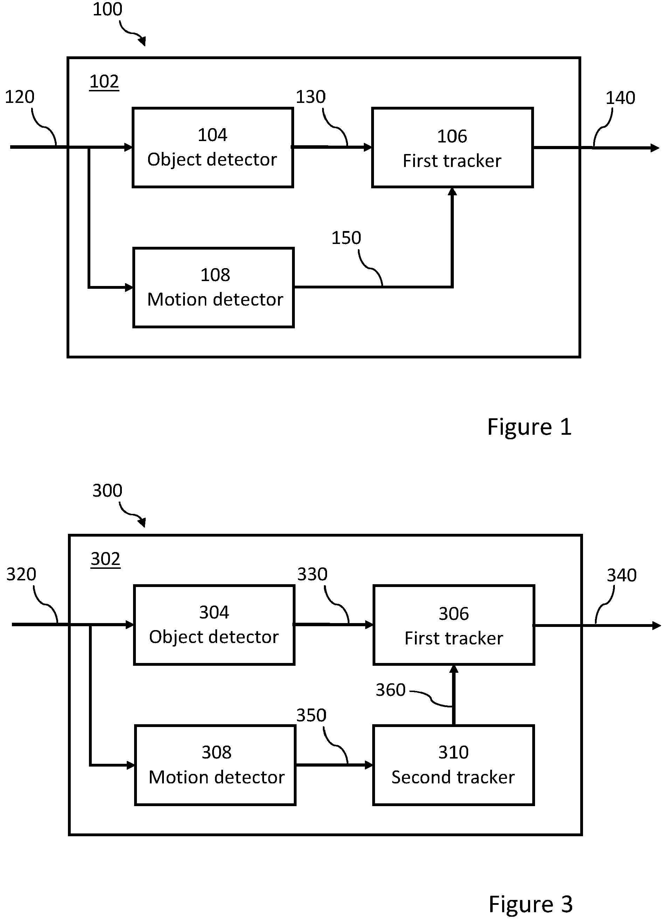

Fig. 1 illustrates a device 100 updating a track of an object in relation to a current image frame. The device comprises circuitry 102 which is configured to carry out a method for updating a track of an object in relation to a current image frame. The circuitry 102 is configured to execute different functions of the device 100. These functions correspond to a computer implemented object detector 104, a first computer implemented tracker 106, and a computer implemented motion detector 108. These are referred to as object detector 104, first tracker 106, and motion detector 108, respectively, in the following.

In a hardware implementation, each of the functions 104, 106, 108 may correspond to circuitry which is dedicated and specifically designed to execute the function. The circuitry may be in the form of one or more integrated circuits, such as one or more application specific integrated circuits or one or more field-programmable gate arrays. By way of example, the first tracker 106 may thus comprise circuitry which, when in use, determines a track of an object in a sequence of image frames.

In a software implementation, the circuitry may instead be in the form of a processor, such as a microprocessor, which in association with computer code instructions stored on a (non-transitory) computer-readable medium, such as a non-volatile memory, causes the device 100 to carry out any method disclosed herein. Examples of non-volatile memory include read-only memory, flash memory, ferroelectric RAM, magnetic computer storage devices, optical discs, and the like. In a software case, the functions 104, 106, 108 may thus each correspond to a portion of computer code instructions stored on the computer-readable medium, that, when executed by the processor, causes the device 100 to execute the function.

It is further understood that a some of the functions 104, 106, 108 may be purely implemented in hardware, and others in software which is stored on a computer-readable medium and executed by a processor (not shown) of the device 100.

When in use, a sequence of image frames 120 is input to the device 100. The sequence of image frames 120 is input to the object detector 104 which is configured to detect objects in the image frames. The object detector 104 may detect objects in each image frame but may also operate at a lower frame rate to detect object in a first subset of image frames, such as in every n:th image frame, where n>1. The object detector 104 may take a single image frame as input and provide object detections 130 of one or more objects in the image frame as output. An object detection may be in the form of an area in the image frame where the object is detected, referred to herein as a detection area, and may be given in the form of a bounding box. In addition to a detection area, the object detector 104 may provide further information of the object detection, such as object class and confidence score of the object classification. The object detector 104 may be configured to detect objects of one or more specific types or object classes, such as persons, vehicles, etc. For this purpose, the object detector 104 may detect objects by extracting features in the image frame. That is, it may detect objects based on their appearance in the image frame. Accordingly, the detections of the object detector 104 may be said to be feature-based or appearance-based object detections. For example, the object detector 104 may implement a deep learning model which has been trained to recognize features in the image frame that correspond to objects of one or more specific object classes of interest. Many such models are known in the art, such as the YOLO object detector (https://arxiv.org/abs/1506.02640) which implements a convolutional neural network for this task.

Each object detection 130 from the object detector 104 is input to the first tracker 106 that outputs a track 140 of the object in the sequence of image frames 120. The object track 140 includes estimated locations in which the first tracker 106 considers the object to be located in image frames of the sequence 120, referred to herein as estimated locations. In one example, the first tracker 106 determines an object location for each image frame in the sequence of image frames 120. In another example, the first tracker 106 determines an object location for those image frames in which the object detector 104 has made a detection of the object. Additionally, the first tracker 106 determines an object location for those image frames when it receives motion detections 150 from the motion detector 108.

Generally, the first tracker 106 may implement a tracking filter which predicts a state of an object from the object detections 130 provided by the object detector 104. By way of example, the tracking filter may be a Kalman filter or a particle filter. In particular, the tracking filter may predict a statistical distribution of the state of the object, for example expressed in terms of its mean vector and covariance matrix in the case of a Gaussian distribution. The tracking filter models the dynamics of the object by using a motion model, such as a linear motion model. The state of the object may be defined by its object area (bounding box) such as its location, width and height, a velocity vector, and a rate of change of the size. It is understood that other definitions of the state are possible, such as the locations of two diagonal corners of the object area together with a velocity vector.

By a motion model is meant a model which describes the motion of an object in terms of a function, such as a linear function in case the motion model is a linear motion model. In particular, it may refer to a model which models the temporal evolution of a state of the object in the sequence of image frames from one time point, corresponding to one image frame in the sequence, to another time point, corresponding to a subsequent image frame in the sequence, e.g. by a linear function. For example, the motion model may model the temporal evolution from one image frame to the next image frame in the sequence. In particular, the motion model may be a constant velocity model, i.e., a model which assumes that the object moves at a constant velocity. As such, the motion model may be used to predict the state of the object in the subsequent image frame given the state of the object in a current image frame. In particular, it may be used to predict an object area where the object is located in the subsequent image frame. The state of the object may for instance be described by a state vector which includes location, velocity, size, and rate of change of the size of the object in the image frames. The location and size of the object together define an object area where the object is located in the image frame. Sometimes a motion model may be referred to as a linear kinematics model or a linear dynamic model.

The first tracker 106 uses the motion model to predict the state of the object at time t, corresponding to a current image frame, from the state of the object at a previous time point t-1, corresponding to a previous image frame. Moreover, in case the object detector 104 has made a detection of the object in the current image frame, i.e., it has observed the state of the object, the first tracker 106 updates the predicted state in view of the object detection, thereby determining the estimated location of the object in the image frame.

The sequence of image frames 120 is further input to the motion detector 108. The motion detector 108 is configured to detect motion in the image frames and output motion detections 150, especially in the form of areas in the image frames where motion is present, referred to herein as motion areas. The motion detector may detect motion in each image frame but does typically operate at a lower frame rate to detect motion in every m:th image frame, where m>1. The frame rate at which the object detector 104 and the motion detector 108 operate may differ. For example, the object detector 104 may operate at a higher frame rate than the motion detector 108 and vice versa. Furthermore, this may result in the motion detector and the object detector not being active in relation to the same frames or even not being active in relation to any same frame. Motion is present in an area when the pixel values in the area change over time, such as between consecutive image frames. The motion detector 108 may hence be configured to find motion areas by detecting changes in the image frames. For example, it may find motion areas by detecting changes between a current image frame in relation to a previous image frame in the sequence 120, by detecting changes between a current image frame and a background model (also known as background subtraction), or a combination of these approaches.

While both the motion detector 108 and the object detector 104 output areas in the image frames where objects potentially could be located, they do so by using different principles. The motion detector 108 finds areas of motion, i.e., pixel areas with changing pixel values, and the object detector 104 finds areas with features that correspond to specific classes of objects. Each of these principles have their advantages and disadvantages. For example, the motion detector 108 is only sensitive to motion which means that it will only be able to detect moving objects. This is in contrast to the object detector 104 which may detect both moving and stationary objects. Further, the motion detector 108 detects any moving objects, regardless of their appearance or object class, whereas the object detector 104 detector detects objects having a specific appearance or object class.

The motion detections 150 from the motion detector 108 are input to the first tracker 106. The motion detections 150 are used to update predicted location of the object to determine estimated locations included in the output track 140.

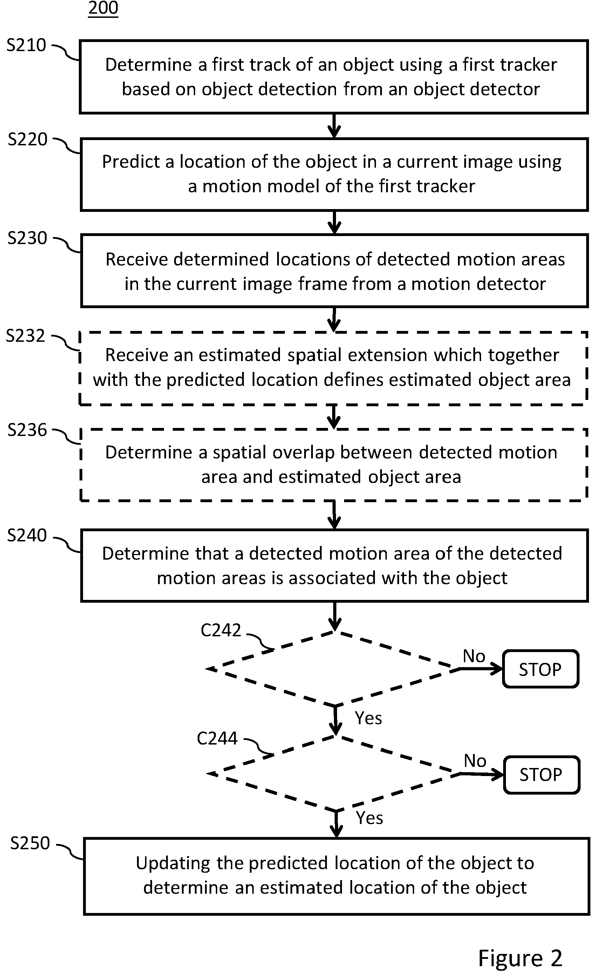

The operation of the device 100 when carrying out a method 200 for updating a track of an object in relation to a current image frame will now be explained with reference to the flow chart of Fig. 2 and with further reference to Fig. 1. If several objects are tracked, it is understood that the method 200 may be applied for each tracked object.

The method 200 comprises determining S210, using a first computer implemented tracker such as the first tracker 106 of Fig. 1, a first track of an object in a sequence of image frames preceding the current image frame. The first tracker 106 is updated in at least a first subset of image frames of the sequence of image frames based on an object detection from a computer implemented object detector using an object detection algorithm, such as the object detector 104 of Fig. 1. The first subset of image frames may for example correspond to an update rate of 15 times, 10 times, or 3 times each second. For a video having 30 frames per second this would correspond to every second frame, every third frame, or every tenth frame respectively, of the sequence of image frames. Other update rates are of course possible depending on what is suitable in the application. The first track includes a respective estimated location of the object in each image frame of the first subset of image frames of the sequence of image frames. The estimated location is typically included in a state of the object for each image frame. In addition to location the state may be defined by width and height, a velocity vector, and a rate of change of the size of the object.

A location of the object in the current image frame is then predicted S220 using a motion model of the first tracker 106. Prediction using the first tracker 106 may be performed in each frame but may also be performed only in frames where either of motion detection and objection detection is performed.

Determined respective locations of detected motion areas in the current image frame are received S230 from a computer implemented motion detector using a motion detection algorithm, such as the motion detector 108 of Fig. 1. The motion detection using the motion detector 108 may be performed asynchronous to the update using the object detector 104. Motion detection and objection detection would then typically not be performed in the same frames. The respective locations of the detected motion areas in the current image frame may be performed using the motion detector 108 and provided to the first tracker 106.

Using the first tracker, and based on the predicted location of the object in the current image frame and the determined respective locations of the detected motion areas, it is determined S240 that a detected motion area of the detected motion areas is associated with the object in the current image frame. The predicted location of the object in the current image frame is updated S250 using the first tracker 106 and based on the determined location of the detected motion area determined to be associated with the object in the current image frame. Thereby an estimated location of the object in the current image frame is determined.

In summary, a *predicted* location/state for the current image frame is based on the *estimated* location/state of the previous image frame. When the *predicted* location/state of the current image frame is updated it becomes the *estimated* location/state for the current frame.

The predicted location of the object in the current image may be updated S250, using the first tracker 106, based on the determined location of the detected motion area determined to be associated with the object in the current image frame only on condition that a criterion C242 is fulfilled. The criterion C242 is that the detected motion area determined to be associated with the object does not overlap a different track than the first track. By a different track here is meant a track related to a different object than the object relating to the first track.

This reduces the risk that the predicted location of the object is updated based on a detected motion area that relates to a different object.

In addition, the predicted location of the object in the current image may be updated, using the first tracker 106, based on the determined location of the detected motion area determined to be associated with the object in the current image frame only on condition that one or more of further criteria C244 are fulfilled. The further criteria C244 are that:
1) the estimated location of the object in each of at least a first predetermined number of image frames of the sequence of image frames preceding the current image frame is not based on an object detection from the computer implemented object detector,
2) a determined spatial confidence for the predicted location of the object in the current image frame is below a first spatial confidence threshold, and
3) a determined velocity of the object for the current image frame is over a velocity threshold.

This further reduces the risk that the predicted location of the object is updated based on a detected motion area that relates to a different object.

The method 200 may further comprise the optional acts of receiving S232, from the first tracker 106, a predicted spatial extension of the object in the current image frame. The predicted spatial extension of the object in the current image frame may for example be defined by a width and height, a polygon, a mask or any other way of defining a spatial extension. The predicted spatial extension together with the predicted location of the object in the current image frame determines a predicted object area of the object in the current image frame. The predicted spatial extension of the object in the current image frame from the first tracker 106 is typically a predicted spatial extension determined from an image frame preceding the current image frame. The predicted spatial extension in the current image may be included in the state of the first tracker 106 in relation to the current image. The method then further comprises determining S236, using the first tracker 106, a spatial overlap between the detected motion area determined to be associated with the object in the current image frame and the predicted object area of the object in the current image frame. In the act of updating S250, the degree to which the location of the detected motion area determined to be associated with the object in the current image frame is taken into account when updating the predicted location of the object in the current image frame is higher with higher determined spatial overlap.

The estimated location of the object in each image frame of the first subset of image frames of the sequence of image frames in the act of determining S210 a first track may be determined by performing the following acts for each image frame of the first subset of image frames. First, a location of the object in the image frame is predicted using the motion model of the first tracker 106. Then the object in the image frame is determined using the object detector 104. A location of the detected object in the image frame is then determined using the object detector 104. Using the first tracker 106, the predicted location of the object in the image frame is then updated based on the determined location of the detected object in the image frame. By this, the estimated location of the object in the image frame is determined.

The method 200 may further comprise preventing updating, using the first tracker 106, the predicted location of the object in the current image frame based on a determined location of a detected object in the current image frame on condition that the following criteria are fulfilled:
1) there are two or more object detections in the current image from the object detector 104 which can be associated with the object in the current image frame,
2) there is a second track in the sequence of image frames preceding the current image frame determined using a second computer implemented tracker (not shown in Fig. 1), wherein the second computer implemented tracker is updated in at least a second subset of image frames of the sequence of image frames based on motion detection from the motion detector 108,
3) the second track is associated with the first track, and
4) the second track is not the result of a split of a track into two tracks or a merge of two tracks into one track within a second predetermined number of image frames of the second subset of image frames of the sequence of image frames preceding the current image frame.

By a split of a track into two tracks is meant that what has been detected as a single track of a single object is detected as two separate tracks of two separate objects. By a merge of two tracks into a single track is meant that what has been detected as two separate tracks of two separate object is detected as a single tracks of a single object.

Preventing updating of the predicted location of the object in the current image frame is only relevant if the object detector 104 performs object detection in the current image frame. Preventing updating of the predicted location of the object may be performed for a subsequent image frame based on the criteria if the object detector 104 performs object detection for the subsequent image frame. Such prevention in relation to subsequent image frames may be limited to subsequent image frames before a next image frame for which the motion detector 108 performs motion detection. After that prevention is based on the criteria based on the next image frame.

The prevention is in relation to updates based on object detection of the object detector 104. By the criteria, updating of predicted location based on object detection of the object detector 104 is blocked in scenarios when the object is tracked by a consistent track from the second computer implemented tracker based on motion detection from the motion detector 108.

Fig. 3 illustrates a device 300 updating a track of an object in relation to a current image frame. The device comprises circuitry 302 which is configured to carry out a method for updating a track of an object in relation to a current image frame. The circuitry 302 is configured to execute different functions of the device 300. These functions correspond to a computer implemented object detector 304, a first computer implemented tracker 306, a computer implemented motion detector 308, and a computer implemented second tracker 310. These are referred to as object detector 304, first tracker 306, motion detector 308, and second tracker 310, respectively, in the following.

In a hardware implementation, each of the functions 304, 306, 308, 310, 312 may correspond to circuitry which is dedicated and specifically designed to execute the function. The circuitry may be in the form of one or more integrated circuits, such as one or more application specific integrated circuits or one or more field-programmable gate arrays. By way of example, the first tracker 306 may thus comprise circuitry which, when in use, determines a track of an object in a sequence of image frames.

In a software implementation, the circuitry may instead be in the form of a processor, such as a microprocessor, which in association with computer code instructions stored on a (non-transitory) computer-readable medium, such as a non-volatile memory, causes the device 300 to carry out any method disclosed herein. Examples of non-volatile memory include read-only memory, flash memory, ferroelectric RAM, magnetic computer storage devices, optical discs, and the like. In a software case, the functions 304, 306, 308, 310, 312 may thus each correspond to a portion of computer code instructions stored on the computer-readable medium, that, when executed by the processor, causes the device 300 to execute the function.

It is further understood that a some of the functions 304, 306, 308, 310, 312 may be purely implemented in hardware, and others in software which is stored on a computer-readable medium and executed by a processor (not shown) of the device 300.

When in use, a sequence of image frames 320 is input to the device 300. The sequence of image frames 320 is input to the object detector 304 which is configured to detect objects in the image frames. The object detector 304 may detect objects in each image frame but may also operate at a lower frame rate to detect object in a first subset of image frames, such as in every n:th image frame, where n>1. The object detector 304 may take a single image frame as input and provide object detections 330 of one or more objects in the image frame as output. An object detection may be in the form of an area in the image frame where the object is detected, referred to herein as a detection area, and may be given in the form of a bounding box. In addition to a detection area, the object detector 304 may provide further information of the object detection, such as object class and confidence score of the object classification. The object detector 304 may be configured to detect objects of one or more specific types or object classes, such as persons, vehicles, etc. For this purpose, the object detector 304 may detect objects by extracting features in the image frame. That is, it may detect objects based on their appearance in the image frame. Accordingly, the detections of the object detector 304 may be said to be feature-based or appearance-based object detections. For example, the object detector 304 may implement a deep learning model which has been trained to recognize features in the image frame that correspond to objects of one or more specific object classes of interest. Many such models are known in the art, such as the YOLO object detector (https://arxiv.org/abs/1506.02640) which implements a convolutional neural network for this task.

Each object detection 330 from the object detector 304 is input to the first tracker 306 that outputs a track 340 of the object in the sequence of image frames 320. The object track 340 includes estimated locations in which the first tracker 306 considers the object to be located in image frames of the sequence 320, referred to herein as estimated locations. In one example, the first tracker 306 determines an object location for each image frame in the sequence of image frames 320. In another example, the first tracker 306 determines an object location for those image frames in which the object detector 304 has made a detection of the object. Additionally, the first tracker 306 determines an object location for those image frames when it receives an input 360 from the second tracker 310.

Generally, the first tracker 306 may implement a tracking filter which predicts a state of an object from the object detections 330 provided by the object detector 304. By way of example, the tracking filter may be a Kalman filter or a particle filter. In particular, the tracking filter may predict a statistical distribution of the state of the object, for example expressed in terms of its mean vector and covariance matrix in the case of a Gaussian distribution. The tracking filter models the dynamics of the object by using a motion model, such as a linear motion model. The state of the object may be defined by its object area (bounding box) such as its location, width and height, a velocity vector, and a rate of change of the size. It is understood that other definitions of the state are possible, such as the locations of two diagonal corners of the object area together with a velocity vector.

The first tracker 306 uses the motion model to predict the state of the object at time t, corresponding to a current image frame, from the state of the object at a previous time point t-1, corresponding to a previous image frame. Moreover, in case the object detector3 has made a detection of the object in the current image frame, i.e., it has observed the state of the object, the first tracker 306 updates the predicted state in view of the object detection, thereby determining the estimated location of the object in the image frame.

The sequence of image frames 320 is further input to the motion detector 308. The motion detector 308 is configured to detect motion in the image frames and output motion detections 350, especially in the form of areas in the image frames where motion is present, referred to herein as motion areas. The motion detector may detect motion in each image frame but does typically operate at a lower frame rate to detect motion in every m:th image frame, where m>1. The frame rate at which the object detector 304 and the motion detector 308 operate may differ. For example, the object detector 304 may operate at a higher frame rate than the motion detector 308 and vice versa. Motion is present in an area when the pixel values in the area change over time, such as between consecutive image frames. The motion detector 308 may hence be configured to find motion areas by detecting changes in the image frames. For example, it may find motion areas by detecting changes between a current image frame in relation to a previous image frame in the sequence 320, by detecting changes between a current image frame and a background model (also known as background subtraction), or a combination of these approaches.

While both the motion detector 308 and the object detector 304 output areas in the image frames where objects potentially could be located, they do so by using different principles. The motion detector 308 finds areas of motion, i.e., pixel areas with changing pixel values, and the object detector 304 finds areas with features that correspond to specific classes of objects. Each of these principles have their advantages and disadvantages. For example, the motion detector 308 is only sensitive to motion which means that it will only be able to detect moving objects. This is in contrast to the object detector 304 which may detect both moving and stationary objects. Further, the motion detector 308 detects any moving objects, regardless of their appearance or object class, whereas the object detector 304 detector detects objects having a specific appearance or object class.

The motion detections 350 from the motion detector 308 are input to the second tracker 310. The second tracker 310 forms one or more tracks from the motion detections 350 and provides these motion tracks 360 as output. The second tracker 310 may generally track the motion areas in the sequence of image frames. For example, it may associate motion areas in different image frames with each other as being likely to correspond to the same object motion. This may simply be based on spatial proximity of the motion areas in subsequent image frames, but it would also be possible to use a tracking filter, such as a Kalman filter. In the latter case, the tracking filter is preferably set to operate with a larger process noise than that of the first tracker 306, and/or to use an acceleration term in the state vector. This is possible since it is generally an easier problem to track motion areas than object detections, since the object detections in addition to moving objects include static objects which increases the risk of identity switches. As a result, the second tracker 310 will be better at handling non-linear motion. Each motion track 360 hence includes motion areas in which motion has been detected, for example in which a change has been detected in relation to a previous image frame or a background model. In one example, the motion track 360 includes motion areas for each image frame in the sequence 320. In another example, the motion track 306 includes motion areas for the image frames in which the motion detector 308 has detected motion.

The motion tracks 360 including the motion areas from the second tracker 310 are input to the first tracker 306. The motion tracks 360 are used to update predicted location of the object to determine estimated locations included in the output track 340.

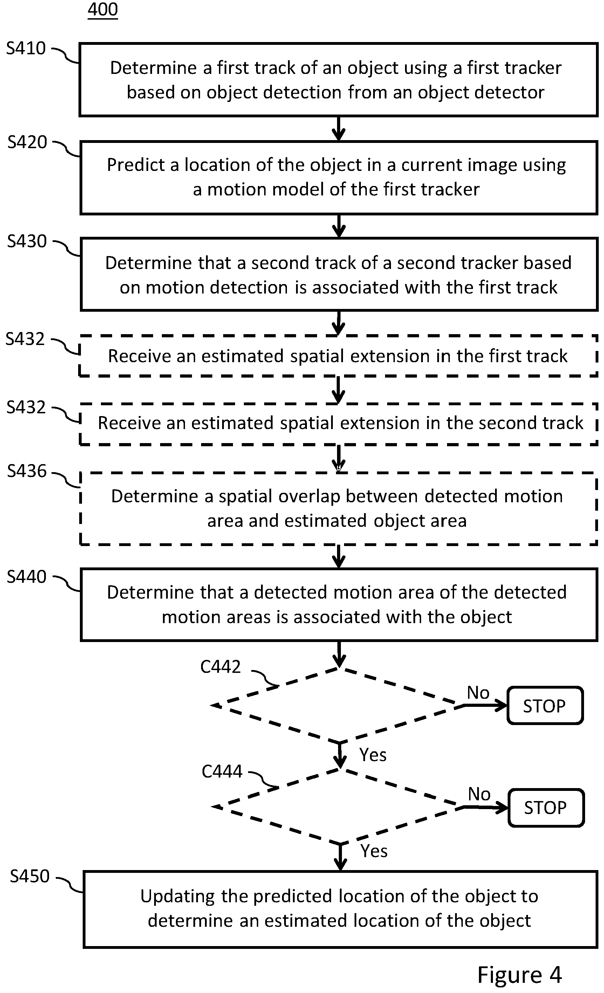

The operation of the device 300 when carrying out a method 400 for updating a track of an object in relation to a current image frame will now be explained with reference to the flow chart of Fig. 4 and with further reference to Fig. 3. If several objects are tracked, it is understood that the method 400 may be applied for each tracked object.

The method 400 comprises determining S410, using a first computer implemented tracker, such as the first tracker 306 of Fig. 3, a first track of an object in a sequence of image frames preceding the current image frame. The first tracker 306 is updated in at least a first subset of image frames of the sequence of image frames based on an object detection from a computer implemented object detector using an object detection algorithm, such as the object detector 304 of Fig 3. The first subset of image frames may for example correspond to an update rate of 15 times, 10 times, or 3 times each second. For a video having 30 frames per second this would correspond to every second frame, every third frame, or every tenth frame respectively, of the sequence of image frames. Other update rates are of course possible depending on what is suitable in the application. The first track includes a respective estimated location of the object in each image frame of the first subset of image frames of the sequence of image frames. In addition to location the state may be defined by width and height, a velocity vector, and a rate of change of the size of the object.

A location in the first track of the object in the current image frame is then predicted S420 using a motion model of the first tracker 306. Prediction using the first tracker 306 may be performed in each frame but may also be performed only in frames where either of motion detection and objection detection is performed.

It is then determined S430 that a second track is associated with the first track. The second track is determined in the sequence of image frames preceding the current using a second computer implemented tracker, such as the second tracker 310 in Fig. 3. The second tracker 310 is updated in at least a second subset of image frames of the sequence of image frames based on motion detection from a computer implemented motion detector using an motion detection algorithm, such as the motion detector 308 in Fig. 3. The motion detection using the motion detector 108 may be performed asynchronous to the update using the object detector 104. Motion detection and objection detection would then typically not be performed in the same frames.

An estimated location in the second track of the object in the current image frame is then received S440 from the second tracker.

The predicted location of the object in the current image frame is updated S450 using the first tracker 306 and based on the received estimated location in the second track of the object in the current image frame. Thereby an estimated location in the first track of the object in the current image frame is determined.

The predicted location of the object in the current image may be updated S450 using the first tracker 306 and based on the received estimated location in the second track of the object in the current image frame only on condition that a criterion C442 is fulfilled. The criterion C242 is that the estimated location in the second track of the object in the current image frame does not overlap a different track than the first track in the current image frame. By a different track here is meant a track related to a different object than the object relating to the first track.

This reduces the risk that the predicted location of the object is updated based on a detected motion area that relates to a different object.

In addition, the predicted location of the object in the current image may be updated using the first tracker 306 and based on the received estimated location in the second track of the object in the current image frame only on condition that one or more of further criteria C444 are fulfilled. The further criteria C444 are that:
1) the estimated location of the object in each of at least a first predetermined number of image frames of the sequence of image frames preceding the current image frame is not based on an object detection from the computer implemented object detector,
2) a determined spatial confidence for the predicted location of the object in the current image frame is below a first spatial confidence threshold, and
3) a determined velocity of the object for the current image frame is over a velocity threshold.

This further reduces the risk that the predicted location of the object is updated based on a detected motion area that relates to a different object.

The method 400 may further comprise the optional acts of receiving S432, from the first tracker 106, a predicted spatial extension in the first track of the object in the current image frame. The predicted spatial extension of the object in the current image frame may for example be defined by a predicted width and height, a polygon, a mask or any other way of defining a spatial extension. The predicted spatial extension together with the predicted location of the object in the current image frame determines a predicted object area of the object in the current image frame. The predicted spatial extension of the object in the current image frame from the first tracker 106 is typically a predicted spatial extension determined from an image frame preceding the current image frame The predicted spatial extension in the current image is typically included in the state of the first tracker 106 in relation to the current image. The method 400 then further comprises receiving S434, from the second tracker 310, an estimated spatial extension in the second track of the object in the current image frame, wherein the estimated spatial extension in the second track of the object in the current image frame together with the estimated location in the second track of the object in the current image frame determines an estimated object area in the second track of the object in the current image frame. The estimated spatial extension in the second track of the object in the current image frame may be determined from a corresponding motion area in the current image frame. The method 400 then further comprises determining S436, using the first tracker 306, a spatial overlap between the estimated spatial extension of the object in the second track of the object in the current image frame and the predicted object area in the first track of the object in the current image frame. In the act of updating S450, the degree to which the received estimated location in the second track of the object in the current image is taken into account when updating the predicted location of the object in the current image frame is higher with higher determined spatial overlap.

The estimated location of the object in each image frame of the first subset of image frames of the sequence of image frames in the act of determining S410 a first track may be determined by performing the following acts for each image frame of the first subset of image frames. First, a location of the object in the image frame is predicted using the motion model of the first tracker 306. Then the object in the image frame is determined using the object detector 304. A location of the detected object in the image frame is then determined using the object detector 304. Using the first tracker 306, the predicted location of the object in the image frame is then updated based on the determined location of the detected object in the image frame. By this, the estimated location of the object in the image frame is determined.

The estimated location of the object in each image frame of the second subset of image frames of the sequence of image frames may be determined by performing the following acts for each image frame of the second subset of image frames. First, a location of the object in the image frame is predicted using a motion model of the second tracker 310. Then a motion area is detected in the image frame using the motion detector 308. A location of the detected motion area is then determined in the image frame using the motion detector 308. Using the second tracker 310, the predicted location of the object in the image frame is updated based on the determined location of the detected motion area in the image frame. By this the estimated location in the second track of the object in the image frame is determined.

The method 200 may further comprise preventing updating, using the first tracker 106, the predicted location of the object in the current image frame based on a determined location of a detected object in the current image frame on condition that the following criteria are fulfilled:
1) there are two or more object detections having a spatial overlap with the predicted location in the first track of the object in the current image frame indicating association;
2) the second track is associated with the first track, and
3) the second track is not the result of a split of a track into two tracks or a merge of two tracks into one track within a third predetermined number of image frames of the second subset of image frames of the sequence of image frames preceding the current image frame.

By a split of a track into two tracks is meant that what has been detected as a single track of a single object is detected as two separate tracks of two separate objects. By a merge of two tracks into a single track is meant that what has been detected as two separate tracks of two separate object is detected as a single tracks of a single object.

Preventing updating of the predicted location of the object in the current image frame is only relevant if the object detector 104 performs object detection in the current image frame. Preventing updating of the predicted location of the object may be performed for a subsequent image frame based on the criteria if the object detector 104 performs object detection for the subsequent image frame. Such prevention in relation to subsequent image frames may be limited to subsequent image frames before a next image frame for which the motion detector 108 performs motion detection. After that prevention is based on the criteria based on the next image frame.

The prevention is in relation to updates based on object detection of the object detector 104. By the criteria, updating of predicted location based on object detection of the object detector 104 is blocked in scenarios when the object is tracked by a consistent track from the second computer implemented tracker based on motion detection from the motion detector 108.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method for updating a track of an object in relation to a current image frame, comprising:
determining, using a first computer implemented tracker, a first track of an object in a sequence of image frames preceding the current image frame, wherein the first computer implemented tracker is updated in at least a first subset of image frames of the sequence of image frames based on an object detection from a computer implemented object detector using an object detection algorithm, and wherein the first track includes a respective estimated location of the object in each image frame of the first subset of image frames of the sequence of image frames;
predicting, using a motion model of the first computer implemented tracker, a location of the object in the current image frame;
receiving, from a computer implemented motion detector using a motion detection algorithm, determined respective locations of detected motion areas in the current image frame;
determining, using the first computer implemented tracker, based on the predicted location of the object in the current image frame, and the determined respective locations of the detected motion areas, that a detected motion area of the detected motion areas is associated with the object in the current image frame; and
only on condition that the detected motion area determined to be associated with the object does not overlap a different track than the first track:
updating, using the first computer implemented tracker, the predicted location of the object in the current image frame based on the determined location of the detected motion area determined to be associated with the object in the current image frame, thereby determining an estimated location of the object in the current image frame.

2. The method according to claim 1, wherein updating, using the first computer implemented tracker, the predicted location of the object in the current image based on the determined location of the detected motion area determined to be associated with the object in the current image frame is performed on condition that one or more of the following further criteria are fulfilled:
the estimated location of the object in each of at least a first predetermined number of image frames of the sequence of image frames preceding the current image frame is not based on an object detection from the computer implemented object detector,
a determined spatial confidence for the predicted location of the object in the current image frame is below a first spatial confidence threshold, and
a determined velocity of the object for the current image frame is over a velocity threshold.

3. The method according to any one of the preceding claims, further comprising:
receiving, from the first computer implemented tracker, a predicted spatial extension of the object in the current image frame, wherein the predicted spatial extension together with the predicted location of the object in the current image frame determines an estimated object area of the object in the current image frame;
determining, using the first computer implemented tracker, a spatial overlap between the detected motion area determined to be associated with the object in the current image frame and the estimated object area of the object in the current image frame,
wherein in the act of updating, the degree to which the location of the detected motion area determined to be associated with the object in the current image frame is taken into account when updating the predicted location of the object in the current image frame is higher with higher determined spatial overlap.

4. The method according to any one of the preceding claims, wherein the estimated location of the object in each image frame of the first subset of image frames of the sequence of image frames is determined by, for each image frame of the first subset of image frames of the sequence of image frames:
predicting, using the motion model of the first computer implemented tracker, a location of the object in the image frame;
detecting the object in the image frame using the computer implemented object detector;
determining a location of the detected object in the image frame using the computer implemented object detector; and
updating, using the first computer implemented tracker, the predicted location of the object in the image frame based on the determined location of the detected object in the image frame, thereby determining the estimated location of the object in the image frame.

5. The method according to any one of the preceding claims, further comprising:
detecting motion areas in the current image frame using the computer implemented motion detector;
determining respective locations of the detected motion areas in the current image frame using the computer implemented motion detector; and
providing the determined respective locations of the detected motion areas in the current image frame to the first computer implemented tracker.

6. The method according to any one of the preceding claims, further comprising:
on condition that:
there are two or more object detections in the current image from the computer implemented object detector which can be associated with the object in the current image frame;
there is a second track in the sequence of image frames preceding the current image frame determined using a second computer implemented tracker, wherein the second computer implemented tracker is updated in at least a second subset of image frames of the sequence of image frames based on motion detection from the computer implemented motion detector;
the second track is associated with the first track; and
the second track is not the result of a split of a track into two tracks or a merge of two tracks into one track within a second predetermined number of image frames of the second subset of image frames of the sequence of image frames preceding the current image frame,
preventing updating, using the first computer implemented tracker, the predicted location of the object in the current image frame based on an estimated location of a detected object in the current image frame.

7. A method for updating a track of an object in relation to a current image frame, comprising:
determining, using a first computer implemented tracker, a first track of an object in a sequence of image frames preceding the current image frame, wherein the first computer implemented tracker is updated in at least a first subset of image frames of the sequence of image frames based on an object detection from a computer implemented object detector using an object detection algorithm, and wherein the first track includes a respective estimated location of the object in each image frame of the first subset of image frames of the sequence of image frames;
predicting, using a motion model of the first computer implemented tracker, a location in the first track of the object in the current image frame;
determining that a second track is associated with the first track, wherein the second track is determined in the sequence of image frames preceding the current using a second computer implemented tracker, wherein the second computer implemented tracker is updated in at least a second subset of image frames of the sequence of image frames based on motion detection from a computer implemented motion detector using an motion detection algorithm;
receiving, from the second computer implemented tracker, an estimated location in the second track of the object in the current image frame; and
only on condition that the estimated location in the second track of the object in the current image frame does not overlap a different track than the first track in the current image frame:
updating, using the first computer implemented tracker, the predicted location of the object in the current image frame based on the received estimated location in the second track of the object in the current image frame, thereby determining an estimated location in the first track of the object in the current image frame.

8. The method according to claim 7, wherein updating, using the first computer implemented tracker, the predicted location of the object in the current image based on the received estimated location in the second track of the object in the current image frame is performed on condition that one or more of the following further criteria are fulfilled:
the estimated location of the object in each of at least a first predetermined number of image frames of the sequence of image frames preceding the current image frame is not based on an object detection from the computer implemented object detector,
a determined spatial confidence for the predicted location of the object in the current image frame is below a first spatial confidence threshold, and
a determined velocity of the object for the current image frame is over a velocity threshold.

9. The method according to any one of claims 7-8, further comprising:
receiving, from the first computer implemented tracker, a predicted spatial extension in the first track of the object in the current image frame, wherein the predicted spatial extension in the first track of the object in the current image frame together with the predicted location in the first track of the object in the current image frame determines a predicted object area in the first track of the object in the current image frame;
receiving, from the second computer implemented tracker, an estimated spatial extension in the second track of the object in the current image frame, wherein the estimated spatial extension in the second track of the object in the current image frame together with the estimated location in the second track of the object in the current image frame determines an estimated object area in the second track of the object in the current image frame;
determining, using the first computer implemented tracker, a spatial overlap between the estimated object area in the second track of the object in the current image frame and the predicted object area in the first track of the object in the current image frame,
wherein in the act of updating, the degree to which the estimated location in the second track of the object in the current image frame is taken into account when updating the predicted location in the first track of the object in the current image frame is higher with higher determined spatial overlap.

10. The method according to any one of claims 7-9, wherein, for the first computer implemented tracker, the estimated location of the object in each image frame of the first subset of image frames of the sequence of image frames is determined by, for each image frame of the first subset of image frames of the sequence of image frames:
predicting, using the motion model of the first computer implemented tracker, a location of the object in the image frame;
detecting the object in the image frame using the computer implemented object detector;
determining a location of the detected object in the image frame using the computer implemented object detector; and
updating, using the first computer implemented tracker, the predicted location of the object in the image frame based on the determined location of the detected object in the image frame, thereby determining the estimated location in the first track of the object in the image frame.

11. The method according to any one of claims 7-10, wherein, for the second computer implemented tracker, the estimated location of the object in each image frame of the second subset of image frames of the sequence of image frames is determined by, for each image frame of the second subset of image frames of the sequence of image frames:
predicting, using a motion model of the second computer implemented tracker, a location of the object in the image frame;
detecting a motion area in the image frame using the computer implemented motion detector;
determining a location of the detected motion area in the image frame using the computer implemented motion detector; and
updating, using the second computer implemented tracker, the predicted location of the object in the image frame based on the determined location of the detected motion area in the image frame, thereby determining the estimated location in the second track of the object in the image frame.

12. The method according to any one of claims 7-11, further comprising:
on condition that:
there are two or more object detections having a spatial overlap with the predicted location in the first track of the object in the current image frame indicating association;
the second track is associated with the first track; and
the second track is not the result of a split or a merge within a third predetermined number of image frames of the second subset of image frames of the sequence of image frames preceding the current image frame,
preventing updating, using the first computer implemented tracker, the predicted location of the object in the current image frame based on a determined location of a detected object in the current image frame.

13. A non-transitory computer-readable medium comprising computer program code which, when executed by a device with processing capability, causes the device to carry out the method according to any one of claims 1-6 or 7-12.

14. A device for updating a track of an object in relation to a current image frame, comprising circuitry configured to execute functions for performing the method according to any one of claim 1-6 or 7-12.

## Patentansprüche

1. Verfahren zum Aktualisieren einer Bewegungsspur eines Objekts in Bezug auf ein aktuelles Einzelbild, mit folgenden Schritten:
Bestimmen einer ersten Spur eines Objekts in einer dem aktuellen Einzelbild vorausgehenden Folge von Einzelbildern unter Verwendung eines ersten computerimplementierten Trackers, wobei der erste computerimplementierte Tracker in mindestens einer ersten Teilmenge von Einzelbildern der Folge von Einzelbildern auf der Grundlage einer Objekterkennung durch einen computerimplementierten Objektdetektor unter Verwendung eines Objekterkennungsalgorithmus aktualisiert wird und wobei die erste Spur eine jeweilige geschätzte Position des Objekts in jedem Einzelbild der ersten Teilmenge von Einzelbildern der Folge von Einzelbildern beinhaltet;
Vorhersagen, unter Verwendung eines Bewegungsmodells des ersten computerimplementierten Trackers, der Position des Objekts im aktuellen Einzelbild;
Empfangen, von einem computerimplementierten Bewegungsdetektor unter Verwendung eines Bewegungserkennungsalgorithmus, der bestimmten jeweiligen Positionen der erkannten Bewegungsbereiche im aktuellen Einzelbild;
Bestimmen, unter Verwendung des ersten computerimplementierten Trackers, auf der Grundlage der vorhergesagten Position des Objekts im aktuellen Einzelbild und der ermittelten jeweiligen Positionen der erkannten Bewegungsbereiche, dass ein erkannter Bewegungsbereich unter den erkannten Bewegungsbereichen mit dem Objekt im aktuellen Einzelbild assoziiert ist; und
nur unter der Voraussetzung, dass der bestimmte Bewegungsbereich, der mit dem Objekt assoziiert wurde, nicht mit einer anderen Spur als der ersten Spur überschneidet:
Aktualisieren, unter Verwendung des ersten computerimplementierten Trackers, der vorhergesagten Position des Objekts im aktuellen Einzelbild auf der Grundlage der ermittelten Position des erkannten Bewegungsbereichs, der mit dem Objekt im aktuellen Einzelbild assoziiert wurde, wodurch eine geschätzte Position des Objekts im aktuellen Einzelbild bestimmt wird.

2. Verfahren nach Anspruch 1, wobei die Aktualisierung der vorhergesagten Position des Objekts im aktuellen Bild unter Verwendung des ersten computerimplementierten Trackers auf der Grundlage der ermittelten Position des erkannten Bewegungsbereichs, die als mit dem Objekt im aktuellen Einzelbild assoziiert bestimmt wurde, unter der Voraussetzung durchgeführt wird, dass eines oder mehrere der folgenden ferneren Kriterien erfüllt sind:
Die geschätzte Position des Objekts in jedem der mindestens einen ersten vorgegebenen Anzahl von Einzelbildern der Folge von Einzelbildern, die dem aktuellen Einzelbild vorausgeht, basiert nicht auf einer Objekterkennung durch den computerimplementierten Objektdetektor,
eine bestimmte räumliche Konfidenz für die vorhergesagte Position des Objekts im aktuellen Einzelbild liegt unterhalb eines ersten Schwellenwerts für die räumliche Konfidenz, und
eine bestimmte Geschwindigkeit des Objekts im aktuellen Einzelbild liegt über einem Geschwindigkeitsschwellenwert.

3. Verfahren nach einem der vorstehenden Ansprüche, das ferner Folgendes umfasst:
Empfangen, vom ersten computerimplementierten Tracker, einer vorhergesagten räumlichen Ausdehnung des Objekts im aktuellen Einzelbild, wobei die vorhergesagte räumliche Ausdehnung zusammen mit der vorhergesagten Position des Objekts im aktuellen Einzelbild eine geschätzte Objektfläche des Objekts im aktuellen Einzelbild bestimmt;
Bestimmen, unter Verwendung des ersten computerimplementierten Trackers, einer räumlichen Überlappung zwischen dem erkannten Bewegungsbereich, der dem Objekt im aktuellen Einzelbild assoziiert wurde, und dem geschätzten Objektbereich des Objekts im aktuellen Einzelbild,
wobei bei der Aktualisierung der Grad, in dem die Position des erfassten Bewegungsbereichs, der als mit dem Objekt im aktuellen Einzelbild assoziiert bestimmt wurde, bei der Aktualisierung der vorhergesagten Position des Objekts im aktuellen Einzelbild berücksichtigt wird, mit zunehmender festgestellter räumlicher Überlappung höher ist.

4. Verfahren nach einem der vorstehenden Ansprüche, wobei die geschätzte Position des Objekts in jedem Einzelbild der ersten Teilmenge von Einzelbildern der Einzelbildsequenz bestimmt wird, indem für jedes Einzelbild der ersten Teilmenge von Einzelbildern der Folge von Einzelbildern:
Vorhersagen, unter Verwendung des Bewegungsmodells des ersten computerimplementierten Trackers, der Position des Objekts im Einzelbild;
Erkennen des Objekts im Einzelbild mithilfe des computerimplementierten Objektdetektors;
Bestimmen einer Position des erkannten Objekts im Einzelbild mithilfe des computerimplementierten Objektdetektors; und
Aktualisieren, unter Verwendung des ersten computerimplementierten Trackers, der vorhergesagten Position des Objekts im Einzelbild auf der Grundlage der ermittelten Position des erkannten Objekts im Einzelbild, wodurch die geschätzte Position des Objekts im Einzelbild bestimmt wird.

5. Verfahren nach einem der vorstehenden Ansprüche, das ferner Folgendes umfasst:
Erkennen von Bewegungsbereichen im aktuellen Einzelbild mithilfe des computerimplementierten Bewegungsdetektors;
Bestimmen der jeweiligen Positionen der erkannten Bewegungsbereiche im aktuellen Einzelbild mithilfe des computerimplementierten Bewegungsdetektors; und
Bereitstellen der bestimmten jeweiligen Positionen der erkannten Bewegungsbereiche im aktuellen Einzelbild an den ersten computerimplementierten Tracker.

6. Verfahren nach einem der vorstehenden Ansprüche, das ferner Folgendes umfasst:
unter der Voraussetzung, dass:
im aktuellen Bild zwei oder mehr Objekterkennungen des computerimplementierten Objektdetektors vorliegen, die dem Objekt im aktuellen Einzelbild assoziiert werden können;
es eine zweite Spur in der Bildsequenz gibt, die dem aktuellen Einzelbild vorausgeht und mithilfe eines zweiten computerimplementierten Trackers bestimmt wird, wobei der zweite computerimplementierte Tracker in mindestens einer zweiten Teilmenge von Einzelbildern der Bildsequenz auf der Grundlage der Bewegungserkennung durch den computerimplementierten Bewegungsdetektor aktualisiert wird;
die zweite Spur mit der ersten Spur assoziiert ist; und
die zweite Spur nicht das Ergebnis einer Aufteilung eines Tracks in zwei Tracks oder einer Zusammenführung von zwei Tracks zu einem Track innerhalb einer zweiten vorgegebenen Anzahl von Einzelbildern der zweiten Teilmenge von Einzelbildern der Folge von Einzelbildern ist, die dem aktuellen Einzelbild vorausgeht,
Verhindern der Aktualisierung, indem mithilfe des ersten computerimplementierten Trackers die vorhergesagte Position des Objekts im aktuellen Einzelbild auf der Grundlage einer geschätzten Position eines erkannten Objekts im aktuellen Einzelbild ermittelt wird.

7. Verfahren zum Aktualisieren einer Bewegungsspur eines Objekts in Bezug auf ein aktuelles Einzelbild, mit folgenden Schritten:
Bestimmen einer ersten Spur eines Objekts in einer dem aktuellen Einzelbild vorausgehenden Folge von Einzelbildern unter Verwendung eines ersten computerimplementierten Trackers, wobei der erste computerimplementierte Tracker in mindestens einer ersten Teilmenge von Einzelbildern der Folge von Einzelbildern auf der Grundlage einer Objekterkennung durch einen computerimplementierten Objektdetektor unter Verwendung eines Objekterkennungsalgorithmus aktualisiert wird und wobei die erste Spur eine jeweilige geschätzte Position des Objekts in jedem Einzelbild der ersten Teilmenge von Einzelbildern der Folge von Einzelbildern beinhaltet;
Vorhersagen, unter Verwendung eines Bewegungsmodells des ersten computerimplementierten Trackers, einer Position des Objekts in der ersten Spur des aktuellen Einzelbildes;
Bestimmen, dass eine zweite Spur mit der ersten Spur assoziiert ist, wobei die zweite Spur in der dem aktuellen Einzelbild vorausgehenden Folge von Einzelbildern unter Verwendung eines zweiten computerimplementierten Trackers bestimmt wird, wobei der zweite computerimplementierte Tracker in mindestens einer zweiten Teilmenge von Einzelbildern der Folge von Einzelbildern auf der Grundlage einer Bewegungserkennung durch einen computerimplementierten Bewegungsdetektor unter Verwendung eines Bewegungserkennungsalgorithmus aktualisiert wird;
Empfangen, von dem zweiten computerimplementierten Tracker, einer geschätzten Position des Objekts in der zweiten Spur des aktuellen Einzelbildes; und
nur unter der Voraussetzung, dass sich die geschätzte Position des Objekts in der zweiten Spur des aktuellen Einzelbildes nicht mit einer anderen Spur als der ersten Spur im aktuellen Einzelbild überschneidet:
Aktualisieren, unter Verwendung des ersten computerimplementierten Trackers, der vorhergesagten Position des Objekts im aktuellen Einzelbild auf der Grundlage der empfangenen geschätzten Position in der zweiten Spur des Objekts im aktuellen Einzelbild, wodurch eine geschätzte Position in der ersten Spur des Objekts im aktuellen Einzelbild bestimmt wird.

8. Verfahren nach Anspruch 7, wobei das Aktualisieren, unter Verwendung des ersten computerimplementierten Trackers, der vorhergesagten Position des Objekts im aktuellen Bild auf der Grundlage der empfangenen geschätzten Position in der zweiten Spur des Objekts im aktuellen Einzelbild unter der Voraussetzung erfolgt, dass eines oder mehrere der folgenden weiteren Kriterien erfüllt sind:
Die geschätzte Position des Objekts in jedem der mindestens einen ersten vorgegebenen Anzahl von Einzelbildern der Folge von Einzelbildern, die dem aktuellen Einzelbild vorausgeht, basiert nicht auf einer Objekterkennung durch den computerimplementierten Objektdetektor,
eine bestimmte räumliche Konfidenz für die vorhergesagte Position des Objekts im aktuellen Einzelbild liegt unterhalb eines ersten Schwellenwerts für die räumliche Konfidenz, und
eine bestimmte Geschwindigkeit des Objekts im aktuellen Einzelbild liegt über einem Geschwindigkeitsschwellenwert.

9. Verfahren nach einem der Ansprüche 7 bis 8, das ferner Folgendes umfasst:
Empfangen, vom ersten computerimplementierten Tracker, einer vorhergesagten räumlichen Ausdehnung der ersten Spur des Objekts im aktuellen Einzelbild, wobei die vorhergesagte räumliche Ausdehnung der ersten Spur des Objekts im aktuellen Einzelbild zusammen mit der vorhergesagten Position der ersten Spur des Objekts im aktuellen Einzelbild einen vorhergesagten Objektbereich der ersten Spur des Objekts im aktuellen Einzelbild bestimmt;
Empfangen, von dem auf dem zweiten Computer implementierten Tracker, einer geschätzten räumlichen Ausdehnung des Objekts in der zweiten Spur des aktuellen Einzelbildes, wobei die geschätzte räumliche Ausdehnung des Objekts in der zweiten Spur des aktuellen Einzelbildes zusammen mit der geschätzten Position des Objekts in der zweiten Spur des aktuellen Einzelbildes eine geschätzte Objektfläche in der zweiten Spur des Objekts im aktuellen Einzelbild bestimmt;
Bestimmen, unter Verwendung des ersten computerimplementierten Trackers, einer räumlichen Überlappung zwischen dem geschätzten Objektbereich in der zweiten Verfolgungsspur des Objekts im aktuellen Einzelbild und dem vorhergesagten Objektbereich in der ersten Verfolgungsspur des Objekts im aktuellen Einzelbild,
wobei bei der Aktualisierung der Grad, in dem die geschätzte Position des Objekts in der zweiten Spur des aktuellen Einzelbildes bei der Aktualisierung der vorhergesagten Position des Objekts in der ersten Spur des aktuellen Einzelbildes berücksichtigt wird, mit zunehmender bestimmter räumlicher Überlappung höher ist.

10. Verfahren nach einem der Ansprüche 7-9, wobei für den ersten computerimplementierten Tracker die geschätzte Position des Objekts in jedem Einzelbild der ersten Teilmenge von Einzelbildeinheiten der Folge von Einzelbildern bestimmt wird, indem für jedes Einzelbild der ersten Teilmenge von Einzelbildeinheiten der Folge von Einzelbildern:
Vorhersagen, unter Verwendung des Bewegungsmodells des ersten computerimplementierten Trackers, der Position des Objekts im Einzelbild;
Erkennen des Objekts im Einzelbild mithilfe des computerimplementierten Objektdetektors;
Bestimmen einer Position des erkannten Objekts im Einzelbild mithilfe des computerimplementierten Objektdetektors; und
Aktualisieren, unter Verwendung des ersten computerimplementierten Trackers, der vorhergesagten Position des Objekts im Einzelbild auf der Grundlage der ermittelten Position des erkannten Objekts im Einzelbild, wodurch die geschätzte Position des Objekts im Einzelbild in der ersten Spur bestimmt wird.

11. Verfahren nach einem der Ansprüche 7-10, wobei für den zweiten computerimplementierten Tracker die geschätzte Position des Objekts in jedem Einzelbild der zweiten Teilmenge von Einzelbildeinheiten der Folge von Einzelbildern bestimmt wird, indem für jedes Einzelbild der zweiten Teilmenge von Einzelbildeinheiten der Folge von Einzelbildern:
Vorhersagen, unter Verwendung eines Bewegungsmodells des zweiten computerimplementierten Trackers, der Position des Objekts im Einzelbild;
Erkennen eines Bewegungsbereichs im Einzelbild mithilfe des computerimplementierten Bewegungsdetektors;
Bestimmen einer Position des erkannten Bewegungsbereichs im Einzelbild mithilfe des computerimplementierten Bewegungsdetektors; und
Aktualisieren, unter Verwendung des zweiten computerimplementierten Trackers, der vorhergesagten Position des Objekts im Einzelbild auf der Grundlage der ermittelten Position des erkannten Bewegungsbereichs im Einzelbild, wodurch die geschätzte Position des Objekts im Einzelbild in der zweiten Spur bestimmt wird.

12. Verfahren nach einem der Ansprüche 7-11, das ferner Folgendes umfasst: unter der Voraussetzung, dass:
zwei oder mehr Objekterkennungen vorliegen, die sich räumlich mit der vorhergesagten Position in der ersten Spur des Objekts im aktuellen Einzelbild assoziieren, was auf eine Assoziation hindeutet;
die zweite Spur mit der ersten Spur assoziiert ist; und
die zweite Spur nicht das Ergebnis einer Aufteilung oder Zusammenführung innerhalb einer dritten vorgegebenen Anzahl von Einzelbildern der zweiten Teilmenge von Einzelbildern der Folge von Einzelbildern ist, die dem aktuellen Einzelbild vorausgeht,
Verhindern der Aktualisierung, unter Verwendung des ersten computerimplementierten Trackers, der vorhergesagten Position des Objekts im aktuellen Einzelbild auf der Grundlage einer bestimmten Position eines erkannten Objekts im aktuellen Einzelbild.

13. Nichtflüchtiges computerlesbares Medium, das einen Computerprogrammcode enthält, der, wenn er von einer Vorrichtung mit Verarbeitungsfähigkeit ausgeführt wird, veranlasst, dass die Vorrichtung das Verfahren gemäß einem der Ansprüche 1-6 oder 7-12 durchführt.

14. Vorrichtung zum Aktualisieren einer Spur eines Objekts in Bezug auf ein aktuelles Einzelbild, mit einer Schaltung, die so ausgebildet ist, dass sie Funktionen zur Durchführung des Verfahrens gemäß einem der Ansprüche 1-6 oder 7-12 ausführt.

## Revendications

1. Procédé de mise à jour d'une trace d'un objet en rapport avec une trame d'image actuelle, comprenant :
la détermination, en utilisant un premier traceur mis en œuvre par ordinateur, d'une première trace d'un objet dans une séquence de trames d'images précédant la trame d'image actuelle, le premier traceur mis en œuvre par ordinateur étant mis à jour dans au moins un premier sous-ensemble de trames d'images de la séquence de trames d'images sur la base d'une détection d'objet provenant d'un détecteur d'objet mis en œuvre par ordinateur en utilisant un algorithme de détection d'objet, et la première trace comportant un emplacement estimé respectif de l'objet dans chaque trame d'image du premier sous-ensemble de trames d'images de la séquence de trames d'images ;
la prédiction, en utilisant un modèle de mouvement du premier traceur mis en œuvre par ordinateur, d'un emplacement de l'objet dans la trame d'image actuelle ;
la réception, en provenance d'un détecteur de mouvement mis en œuvre par ordinateur en utilisant un algorithme de détection de mouvement, d'emplacements respectifs déterminés de zones de mouvement détectées dans la trame d'image actuelle ;
la détermination, en utilisant le premier traceur mis en œuvre par ordinateur, sur la base de l'emplacement prédit de l'objet dans la trame d'image actuelle, et des emplacements respectifs déterminés des zones de mouvement détectées, qu'une zone de mouvement détectée parmi les zones de mouvement détectées est associée à l'objet dans la trame d'image actuelle ; et
uniquement à condition que la zone de mouvement détectée déterminée comme étant associée à l'objet ne chevauche pas une trace différente de la première trace :
la mise à jour, en utilisant le premier traceur mis en œuvre par ordinateur, de l'emplacement prédit de l'objet dans la trame d'image actuelle sur la base de l'emplacement déterminé de la zone de mouvement détectée déterminée comme étant associée à l'objet dans la trame d'image actuelle, la détermination ainsi d'un emplacement estimé de l'objet dans la trame d'image actuelle.

2. Procédé selon la revendication 1, dans lequel la mise à jour, en utilisant le premier traceur mis en œuvre par ordinateur, de l'emplacement prédit de l'objet dans l'image actuelle sur la base de l'emplacement déterminé de la zone de mouvement détectée déterminée comme étant associée à l'objet dans la trame d'image actuelle est réalisée à condition qu'un ou plusieurs des critères supplémentaires suivants soient remplis :
l'emplacement estimé de l'objet dans chacun d'au moins un premier nombre prédéterminé de trames d'images de la séquence de trames d'images précédant la trame d'image actuelle n'est pas basé sur une détection d'objet provenant du détecteur d'objet mis en œuvre par ordinateur,
une confiance spatiale déterminée pour l'emplacement prédit de l'objet dans la trame d'image actuelle est inférieure à un premier seuil de confiance spatiale, et
une vitesse déterminée de l'objet pour la trame d'image actuelle est supérieure à un seuil de vitesse.

3. Procédé selon l'une quelconque des revendications précédentes, comprenant en outre :
la réception, en provenance du premier traceur mis en œuvre par ordinateur, d'une extension spatiale prédite de l'objet dans la trame d'image actuelle, l'extension spatiale prédite conjointement avec l'emplacement prédit de l'objet dans la trame d'image actuelle déterminant une zone d'objet estimée de l'objet dans la trame d'image actuelle ;
la détermination, en utilisant le premier traceur mis en œuvre par ordinateur, d'un chevauchement spatial entre la zone de mouvement détectée déterminée comme étant associée à l'objet dans la trame d'image actuelle et la zone d'objet estimée de l'objet dans la trame d'image actuelle,
dans lequel, lors de la mise à jour, le degré auquel l'emplacement de la zone de mouvement détectée déterminée comme étant associée à l'objet dans la trame d'image actuelle est pris en compte lors de la mise à jour de l'emplacement prédit de l'objet dans la trame d'image actuelle est plus élevé avec un chevauchement spatial déterminé plus élevé.

4. Procédé selon l'une quelconque des revendications précédentes, dans lequel l'emplacement estimé de l'objet dans chaque trame d'image du premier sous-ensemble de trames d'images de la séquence de trames d'images est déterminé par, pour chaque trame d'image du premier sous-ensemble de trames d'images de la séquence de trames d'images :
la prédiction, en utilisant le modèle de mouvement du premier traceur mis en œuvre par ordinateur, d'un emplacement de l'objet dans la trame d'image ;
la détection de l'objet dans la trame d'image en utilisant le détecteur d'objet mis en œuvre par ordinateur ;
la détermination d'un emplacement de l'objet détecté dans la trame d'image en utilisant le détecteur d'objet mis en œuvre par ordinateur ; et
la mise à jour, en utilisant le premier traceur mis en œuvre par ordinateur, de l'emplacement prédit de l'objet dans la trame d'image sur la base de l'emplacement déterminé de l'objet détecté dans la trame d'image, la détermination ainsi de l'emplacement estimé de l'objet dans la trame d'image.

5. Procédé selon l'une quelconque des revendications précédentes, comprenant en outre :
la détection de zones de mouvement dans la trame d'image actuelle en utilisant le détecteur de mouvement mis en œuvre par ordinateur ;
la détermination d'emplacements respectifs des zones de mouvement détectées dans la trame d'image actuelle en utilisant le détecteur de mouvement mis en œuvre par ordinateur ; et
la fourniture des emplacements respectifs déterminés des zones de mouvement détectées dans la trame d'image actuelle au premier traceur mis en œuvre par ordinateur.

6. Procédé selon l'une quelconque des revendications précédentes, comprenant en outre :
à condition que :
il y ait deux détections d'objet ou plus dans l'image actuelle en provenance du détecteur d'objet mis en œuvre par ordinateur qui peuvent être associées à l'objet dans la trame d'image actuelle ;
il y ait une deuxième trace dans la séquence de trames d'images précédant la trame d'image actuelle déterminée en utilisant un deuxième traceur mis en œuvre par ordinateur, le deuxième traceur mis en œuvre par ordinateur étant mis à jour dans au moins un deuxième sous-ensemble de trames d'images de la séquence de trames d'images sur la base d'une détection de mouvement provenant du détecteur de mouvement mis en œuvre par ordinateur ;
la deuxième trace soit associée à la première trace ; et la deuxième trace ne soit pas le résultat d'une division d'une trace en deux traces ou d'une fusion de deux traces en une trace au sein d'un deuxième nombre prédéterminé de trames d'images du deuxième sous-ensemble de trames d'images de la séquence de trames d'images précédant la trame d'image actuelle,
l'empêchement de la mise à jour, en utilisant le premier traceur mis en œuvre par ordinateur, de l'emplacement prédit de l'objet dans la trame d'image actuelle sur la base d'un emplacement estimé d'un objet détecté dans la trame d'image actuelle.

7. Procédé de mise à jour d'une trace d'un objet en rapport avec une trame d'image actuelle, comprenant :
la détermination, en utilisant un premier traceur mis en œuvre par ordinateur, d'une première trace d'un objet dans une séquence de trames d'images précédant la trame d'image actuelle, le premier traceur mis en œuvre par ordinateur étant mis à jour dans au moins un premier sous-ensemble de trames d'images de la séquence de trames d'images sur la base d'une détection d'objet provenant d'un détecteur d'objet mis en œuvre par ordinateur en utilisant un algorithme de détection d'objet, et la première trace comportant un emplacement estimé respectif de l'objet dans chaque trame d'image du premier sous-ensemble de trames d'images de la séquence de trames d'images ;
la prédiction, en utilisant un modèle de mouvement du premier traceur mis en œuvre par ordinateur, d'un emplacement dans la première trace de l'objet dans la trame d'image actuelle ;
la détermination qu'une deuxième trace est associée à la première trace, la deuxième trace étant déterminée dans la séquence de trames d'images précédant l'actuelle en utilisant un deuxième traceur mis en œuvre par ordinateur, le deuxième traceur mis en œuvre par ordinateur étant mis à jour dans au moins un deuxième sous-ensemble de trames d'images de la séquence de trames d'images sur la base d'une détection de mouvement provenant d'un détecteur de mouvement mis en œuvre par ordinateur en utilisant un algorithme de détection de mouvement ;
la réception, en provenance du deuxième traceur mis en œuvre par ordinateur, d'un emplacement estimé dans la deuxième trace de l'objet dans la trame d'image actuelle ; et
uniquement à condition que l'emplacement estimé dans la deuxième trace de l'objet dans la trame d'image actuelle ne chevauche pas une trace différente de la première trace dans la trame d'image actuelle :
la mise à jour, en utilisant le premier traceur mis en œuvre par ordinateur, de l'emplacement prédit de l'objet dans la trame d'image actuelle sur la base de l'emplacement estimé reçu dans la deuxième trace de l'objet dans la trame d'image actuelle, la détermination ainsi d'un emplacement estimé dans la première trace de l'objet dans la trame d'image actuelle.

8. Procédé selon la revendication 7, dans lequel la mise à jour, en utilisant le premier traceur mis en œuvre par ordinateur, de l'emplacement prédit de l'objet dans l'image actuelle sur la base de l'emplacement estimé reçu dans la deuxième trace de l'objet dans la trame d'image actuelle est réalisée à condition qu'un ou plusieurs des critères supplémentaires suivants soient remplis :
l'emplacement estimé de l'objet dans chacun d'au moins un premier nombre prédéterminé de trames d'images de la séquence de trames d'images précédant la trame d'image actuelle n'est pas basé sur une détection d'objet provenant du détecteur d'objet mis en œuvre par ordinateur,
une confiance spatiale déterminée pour l'emplacement prédit de l'objet dans la trame d'image actuelle est inférieure à un premier seuil de confiance spatiale, et une vitesse déterminée de l'objet pour la trame d'image actuelle est supérieure à un seuil de vitesse.

9. Procédé selon l'une quelconque des revendications 7 et 8, comprenant en outre :
la réception, en provenance du premier traceur mis en œuvre par ordinateur, d'une extension spatiale prédite dans la première trace de l'objet dans la trame d'image actuelle, l'extension spatiale prédite dans la première trace de l'objet dans la trame d'image actuelle conjointement avec l'emplacement prédit dans la première trace de l'objet dans la trame d'image actuelle déterminant une zone d'objet prédite dans la première trace de l'objet dans la trame d'image actuelle ;
la réception, en provenance du deuxième traceur mis en œuvre par ordinateur, d'une extension spatiale estimée dans la deuxième trace de l'objet dans la trame d'image actuelle, l'extension spatiale estimée dans la deuxième trace de l'objet dans la trame d'image actuelle conjointement avec l'emplacement estimé dans la deuxième trace de l'objet dans la trame d'image actuelle déterminant une zone d'objet estimée dans la deuxième trace de l'objet dans la trame d'image actuelle ;
la détermination, en utilisant le premier traceur mis en œuvre par ordinateur, d'un chevauchement spatial entre la zone d'objet estimée dans la deuxième trace de l'objet dans la trame d'image actuelle et la zone d'objet prédite dans la première trace de l'objet dans la trame d'image actuelle,
dans lequel, lors de la mise à jour, le degré auquel l'emplacement estimé dans la deuxième trace de l'objet dans la trame d'image actuelle est pris en compte lors de la mise à jour de l'emplacement prédit dans la première trace de l'objet dans la trame d'image actuelle est plus élevé avec un chevauchement spatial déterminé plus élevé.

10. Procédé selon l'une quelconque des revendications 7 à 9, dans lequel, pour le premier traceur mis en œuvre par ordinateur, l'emplacement estimé de l'objet dans chaque trame d'image du premier sous-ensemble de trames d'images de la séquence de trames d'images est déterminé par, pour chaque trame d'image du premier sous-ensemble de trames d'images de la séquence de trames d'images :
la prédiction, en utilisant le modèle de mouvement du premier traceur mis en œuvre par ordinateur, d'un emplacement de l'objet dans la trame d'image ;
la détection de l'objet dans la trame d'image en utilisant le détecteur d'objet mis en œuvre par ordinateur ;
la détermination d'un emplacement de l'objet détecté dans la trame d'image en utilisant le détecteur d'objet mis en œuvre par ordinateur ; et
la mise à jour, en utilisant le premier traceur mis en œuvre par ordinateur, de l'emplacement prédit de l'objet dans la trame d'image sur la base de l'emplacement déterminé de l'objet détecté dans la trame d'image, la détermination ainsi de l'emplacement estimé dans la première trace de l'objet dans la trame d'image.

11. Procédé selon l'une quelconque des revendications 7 à 10, dans lequel, pour le deuxième traceur mis en œuvre par ordinateur, l'emplacement estimé de l'objet dans chaque trame d'image du deuxième sous-ensemble de trames d'images de la séquence de trames d'images est déterminé par, pour chaque trame d'image du deuxième sous-ensemble de trames d'images de la séquence de trames d'images :
la prédiction, en utilisant un modèle de mouvement du deuxième traceur mis en œuvre par ordinateur, d'un emplacement de l'objet dans la trame d'image ;
la détection d'une zone de mouvement dans la trame d'image en utilisant le détecteur de mouvement mis en œuvre par ordinateur ;
la détermination d'un emplacement de la zone de mouvement détectée dans la trame d'image en utilisant le détecteur de mouvement mis en œuvre par ordinateur ; et
la mise à jour, en utilisant le deuxième traceur mis en œuvre par ordinateur, de l'emplacement prédit de l'objet dans la trame d'image sur la base de l'emplacement déterminé de la zone de mouvement détectée dans la trame d'image, la détermination ainsi de l'emplacement estimé dans la deuxième trace de l'objet dans la trame d'image.

12. Procédé selon l'une quelconque des revendications 7 à 11, comprenant en outre : à condition que :
il y ait au moins deux détections d'objet ayant un chevauchement spatial avec l'emplacement prédit dans la première trace de l'objet dans la trame d'image actuelle indiquant l'association ;
la deuxième trace soit associée à la première trace ; et la deuxième trace ne soit pas le résultat d'une division ou d'une fusion au sein d'un troisième nombre prédéterminé de trames d'images du deuxième sous-ensemble de trames d'images de la séquence de trames d'images précédant la trame d'image actuelle,
l'empêchement de la mise à jour, en utilisant le premier traceur mis en œuvre par ordinateur, de l'emplacement prédit de l'objet dans la trame d'image actuelle sur la base d'un emplacement déterminé d'un objet détecté dans la trame d'image actuelle.

13. Support non transitoire lisible par ordinateur comprenant un code de programme informatique qui, lorsqu'il est exécuté par un dispositif avec une capacité de traitement, amène le dispositif à mettre en œuvre le procédé selon l'une quelconque des revendications 1 à 6 ou 7 à 12.

14. Dispositif pour mettre à jour une trace d'un objet en rapport avec une trame d'image actuelle, comprenant une circuiterie configurée pour exécuter des fonctions pour réaliser le procédé selon l'une quelconque des revendications 1 à 6 ou 7 à 12.
